# EUROPÄISCHE PATENTANMELDUNG

(11) **EP 2 869 150 A1**
(43) Veröffentlichungstag der Anmeldung: **06.05.2015**
(21) Anmeldenummer: 13191088.7
(22) Anmeldetag: 31.10.2013
(51) Int. Cl.: G05B 19/418, H04L 1/14, H04L 1/22, H04L 1/24, H04L 12/40

(54) **Anordnung zur seriellen Datenübertragung und Verfahren zum Betrieb**

(71) Anmelder: Siemens Aktiengesellschaft, 80333 München (DE)
(72) Erfinder: Zipper, Mathias, 90762 Fürth (DE)

(57) **Zusammenfassung**

Um die Störfestigkeit einer Anordnung (1) zur seriellen Datenübertragung zwischen einer Verarbeitungseinheit (V) und einem Feldgerät (F), umfassend
- die Verarbeitungseinheit (V),
- das Feldgerät (F),
- eine Verbindungsleitung (2) aufweisend ein Datenleitungspaar (2a) für Datensignale und ein Taktleitungspaar (2b) für Taktsignale (100), zu erhöhen, wird vorgeschlagen,

die Verarbeitungseinheit (V) mit einem dritten Empfänger (E3) auszurüsten, welcher ausgestaltet ist die von einem ersten Sender (S1) ausgesendeten Taktsignale (100) zurückzulesen, wobei die Verarbeitungseinheit (V) weiterhin ein Vergleichsmittel (3) aufweist, welches ausgestaltet ist die vom ersten Sender (S1) ausgesendeten Taktsignale (100) mit dem vom dritten Empfänger (E3) zurückgelesenen Taktsignale (111) zu vergleichen und bei Ungleichheit ein Ungültigkeitssignal (4) ausgibt, wobei die Verarbeitungseinheit (V) weiterhin dazu ausgestaltet ist, bei vorliegen des Ungültigkeitssignals (4) die Datensignale (101), welche von dem ersten Empfänger (E1) empfangen wurden, als ungültig zu verwerfen.

## Beschreibung

Die Erfindung betrifft eine Anordnung zur seriellen Datenübertragung zwischen einer Verarbeitungseinheit und einem Feldgerät, umfassend die Verarbeitungseinheit, das Feldgerät, eine Verbindungsleitung aufweisend ein Datenleitungspaar für Datensignale und ein Taktleitungspaar für Taktsignale, wobei die Verarbeitungseinheit über die Verbindungsleitung mit den Feldgerät verbunden ist, die Verarbeitungseinheit weist einen ersten Sender zum Senden der Taktsignale und einen ersten Empfänger zum Empfangen der Datensignale auf, das Feldgerät weist einen zweiten Sender zum Senden der Datensignale und einem zweiten Empfänger zum Empfangen der Taktsignale auf, wobei der erste Sender mit dem ersten Empfänger über das Taktleitungspaar verbunden ist und der zweite Sender mit dem ersten Empfänger über das Datenleitungspaar verbunden ist.

Des Weiteren betrifft die Erfindung ein Verfahren zum Betrieb einer Anordnung zur seriellen Datenübertragung zwischen einer Verarbeitungseinheit und einem Feldgerät, wobei in der Verarbeitungseinheit ein Taktgenerator zur Ausgabe eines Taktsignals über einen ersten Sender betrieben wird, dass Taktsignal wird in dem Feldgerät mittels eines zweiten Empfängers empfangen, wobei mit den empfangenen Taktsignalen in dem Feldgerät ein zweiter Sender derart gesteuert wird, dass über ihn aus einem Parallel-Serien-Schieberegister Datensignale seriell zu einem ersten Empfänger in der Verarbeitungseinheit gesendet werden.

Im Sinne der Erfindung soll unter serieller Datenübertragung eine Datenübertragung verstanden werden, wie sie vorzugsweise bei einer Synchronen-Seriellen-Schnittstelle (SSI) eingesetzt wird. Eine Synchrone-Serielle-Schnittstelle ist vorzugsweise eine Schnittstelle, welche zwischen einer Verarbeitungseinheit beispielsweise einem Automatisierungsgerät und einem Messwertgeber eingesetzt wird. Diese Schnittstelle ermöglicht es, durch eine serielle Datenübertragung eine Information über einen Messwert eines Messwertgebers zu erhalten.

In der europäischen Offenlegungsschrift EP 0 171 579 A1 mit einem Veröffentlichungsdatum 19.02.1986, wird das Prinzip der Synchronen-Seriellen-Schnittstelle ausführlich beschrieben. Es wird eine Anordnung zur seriellen Übertragung von Messwerten wenigstens eines Messwertwandlers offenbart. Zur Übertragung von graycodierten Messwerten eines Messwertwandlers, insbesondere eines Winkelkodierers oder eines Wegmesskodierers, werden die parallel anstehenden Messwerte in einem Parallel-Serien-Schieberegister gespeichert und seriell im Takt einer Taktimpulsfolge übertragen, die Taktimpulsfolge wird von einer die Messwerte aufnehmenden Verarbeitungseinheit erzeugt. Diese synchrone serielle Übertragung ermöglicht eine einfache Verarbeitung der übertragenen Daten und eine hohe Baudrate der Datenübertragung. Die Technik der synchronen seriellen Datenübertragung mit einem Parallel-Serien-Schieberegistern gesteuert durch Taktimpulsfolgen wird als für den Fachmann bekannt vorausgesetzt.

Im Sinne der Erfindung soll unter Feldgerät, vorzugsweise eine technische Einrichtung im Bereich der Automatisierungstechnik, die mit einem Produktionsprozess in direkter Beziehung steht verstanden werden. Unter Feldgeräte sollen demnach sowohl Aktoren (Stellglieder, Ventile, ...) als auch Sensoren (Messumformer) verstanden werden.

Als eine Verarbeitungseinheit wird im Sinne der Erfindung vorzugsweise eine Ein-/Ausgabebaugruppe der Automatisierungstechnik verstanden.

Das Prinzip der Datenübertragung erklärt sich wie folgt. In einem Feldgerät, beispielsweise einem Sensor, wird ein Schieberegister fortlaufend mit einem aktuellen Messwert parallel geladen. Wenn von der Verarbeitungseinheit ein Messwert gelesen werden soll, gibt die Verarbeitungseinheit eine Taktfolge auf der Taktleitung aus. Die erste fallende Flanke der Taktfolge steuert ein Monoflop in dem Sensor an, welches das Schieberegister von einem parallelen Laden des Messwertes in eine serielle Ausgabe für den Messwert umstellt. Bei jeder folgenden steigenden Taktflanke wird nun ein Datenbit ausgegeben. Wenn das niederwertigste Datenbit empfangen wurde, wird der Takt gestoppt. Das Monoflop, dass von den Taktimpulsen immer nachgetriggert wurde, fällt nach Ablauf einer Schaltzeit wieder in seinen Grundzustand und erlaubt wieder die parallele Aufnahme der Messwerte in das Schieberegister.

Bei dieser Art der seriellen Datenübertragung wird es als nachteilig empfunden, dass bei Störungen auf den Datenleitungen oder Taktleitungen nicht alle auftretenden Fehler vom Empfänger erkannt werden können. Verfälschte SSI-Protokolle und damit falsche Nutzdaten (Messwerte) werden u.U. als gültig interpretiert. Über die Verarbeitungseinheit werden dann falsche Messwerte an ein übergeordnetes Automatisierungssystem geliefert. Als Folge dessen, kann eine Produktion in einer Fabrik zeitweise zum Stillstand kommen oder es kann vermehrt Ausschuss produziert werden.

Unter Störungen sollen vorzugsweise EMV-Störungen, beispielsweise Einkopplungen von Störfeldern oder Reflektionen auf Signalleitungen, verstanden werden. Nach bestehendem Stand der Technik wurde versucht, die Hardware der Verarbeitungseinheit und des Feldgerätes soweit störresistent auszulegen, dass Störungen keine verfälschten Daten zur Folge haben. Hierzu wurden Schirmmaßnahmen, Schirmanbindungen und Störableitungswege in die Verarbeitungseinheit bzw. die Feldgeräte, eingebaut.

Es ist Aufgabe der vorliegenden Erfindung eine Anordnung und ein Verfahren bereitzustellen, welches eine verbesserte Fehlererkennung bei der Synchronen-seriellen-Datenübertragung ermöglicht.

Die Aufgabe wird für die eingangs genannte Anordnung zur seriellen Datenübertragung zwischen einer Verarbeitungseinheit und einem Feldgerät dadurch gelöst, dass die Verarbeitungseinheit einen dritten Empfänger aufweist, welcher ausgestaltet ist, die vom ersten Sender ausgesendeten Taktsignale zurückzulesen, wobei die Verarbeitungseinheit weiterhin ein Vergleichsmittel aufweist, welches ausgestaltet ist, die vom ersten Sender ausgesendeten Signale mit den vom dritten Empfänger zurückgelesenen Taktsignale zu vergleichen und bei Ungleichheit ein Ungültigkeitssignal ausgibt, wobei die Verarbeitungseinheit weiterhin dazu ausgestaltet ist bei vorliegen des Ungültigkeitssignals die Datensignale, welche vom ersten Empfänger empfangen wurden, als ungültig zu verwerfen.

Da derartige Anordnungen in der Automatisierungstechnik in der Regel starken elektromagnetischen Feldern ausgesetzt sind, kann es vorkommen, dass in die Verbindungsleitung, insbesondere in das Datenleitungspaar oder in das Taktleitungspaar elektromagnetische Störungen eingekoppelt werden. Werden beispielsweise in das Taktleitungspaar EMV-Störungen eingekoppelt, so kann die Taktfolge durch einen zusätzlichen Takt oder einen ausgelöschten Takt gestört sein. Da die Serielle-Datenübertragung mit dem Takt gesteuert wird, macht sich ein fehlender oder zusätzlicher Takt in den Taktsignalen störend bemerkbar. Da die Taktsignale das Schieberegister in dem Feldgerät steuern, wird durch einen falschen Takt das Feldgerät falsch gesteuert und die zu übertragenen Datenbits des Messwertes sind nicht mehr in der richtigen Reihenfolge. Mit dem Vergleichsmittel, welches das ausgesendete Taktsignal mit dem zurückgelesenen Taktsignalen vergleicht, ist die Verarbeitungseinheit nun in der Lage ein gestörtes Taktsignal zu erkennen. Wird ein gestörtes Taktsignal erkannt, so werden die Datensignale, welche von dem ersten Empfänger empfangen wurden, zur Sicherheit als ungültig verworfen.

In einer ersten alternativen Ausgestaltung ist ein Eingang des dritten Empfängers unmittelbar mit einem Ausgang des ersten Senders zum Zurücklesen der Taktsignale verbunden. Bei dieser Variante wird der Status des von der Verarbeitungseinheit ausgegebenen Taktes direkt von der Verarbeitungseinheit durch beispielsweise einen weiteren RS422-Empfänger zurückgelesen. In einer Firmware der Verarbeitungseinheit wird vorzugsweise in der Vergleichseinheit, permanent das ausgegebene Taktsignal mit dem eingelesenen Taktsignal verglichen.

Eine zweite alternative Ausgestaltung der Anordnung sieht vor, dass ein Eingang des dritten Empfängers mit einem Zusatzleitungspaar verbunden ist, und in dem Feldgerät weiterhin ein dritter Sender angeordnet ist, an welchen an einem Ausgang des dritten Senders das Zusatzleitungspaar zum Zurücksenden der Taktsignale angeschlossen ist, wobei ein Ausgang des ersten Empfängers mit einem Eingang des dritten Senders zum Zurückspeisen der Taktsignale in Verbindung steht.

Bei dieser Variante wird ein zusätzliches Kabelpaar in der Verbindungsleitung genutzt. Das Feldgerät sendet nun nicht nur seine Messwert-Daten zurück, sondern gibt auch die von ihm eingelesenen Taktsignale wieder über einen Sender auf das Zusatzleitungspaar aus. Diese zurückgelesenen Taktsignale werden über das zusätzliche Leitungspaar in der Verbindungsleitung zur Verarbeitungseinheit gesendet. Da das Feldgerät nun die von ihm eingelesene Taktfolge wieder zurückschickt, kann eine zusätzliche oder eine fehlende Taktflanke in der Taktfolge von der Verarbeitungseinheit erkannt werden und bei einer Abweichung der ausgesendeten Taktfolge zu der zurückgelesenen Taktfolge können die Messwerte verworfen werden.

Mit Vorteil ist bei der Anordnung dem ersten Empfänger und dem zweiten Sender je ein Parallel-Serien-Schieberegister zugeordnet.

Vorteilhafter Weise ist dem ersten Sender ein Taktgenerator zugeordnet und das Vergleichsmittel ist derart mit dem Taktgenerator verbunden, dass es die Taktsignale vor dem Ausgang des ersten Senders für den Vergleich abgreift. Die original Taktsignale für den späteren Vergleich mit den zurückgelesenen Taktsignalen sind möglichst frühzeitig aus der Verarbeitungseinheit abzugreifen, denn wenn sich eine EMV-Störung auf den Taktleitungspaar bemerkbar macht, soll sich diese Störung verständlicherweise nicht auf die originalen Taktsignale auswirken. Ansonsten könnte ein Vergleich von zwei gleichzeitig gestörten Signalen erfolgen, welcher wiederum zu einen richtigen Ergebnis führen würde. Dies ist aber nicht gewünscht.

Um die Rückwirkung von EMV-Störungen auf die originalen Taktsignale zu verhindern, weist die Verarbeitungseinheit vorzugsweise eine Entkopplungseinheit auf, welche den ersten Sender von einem Taktgenerator galvanisch trennt.

Eine verbesserte Fehlererkennung bei der Synchronen-Seriellen-Schnittstelle wird auch durch ein Verfahren zum Betrieb einer Anordnung zur seriellen Datenübertragung zwischen einer Verarbeitungseinheit und einem Feldgerät erreicht. In der Verarbeitungseinheit wird ein Taktgenerator zur Ausgabe eines Taktsignales über einen ersten Sensor betrieben, das Taktsignal wird in dem Feldgerät mittels eines zweiten Empfängers empfangen, wobei mit den empfangenen Taktsignalen in dem Feldgerät ein zweiter Sender derart gesteuert wird, dass über ihn aus einem Parallel-Serien-Schieberegister Datensignale seriell zu einem ersten Empfänger in der Verarbeitungseinheit gesendet werden. Sollten die Taktsignale aufgrund von EMV-Störungen gestört sein, so wird das folgendermaßen erkannt; in der Verarbeitungseinheit werden mittels eines dritten Empfängers die vom ersten Sender ausgesendeten Taktsignale zurückgelesen, wobei in der Verarbeitungseinheit ein Vergleichsmittel betrieben wird, welches die vom ersten Sender ausgesendeten Taktsignale mit dem vom dritten Empfänger zurückgelesenen Taktsignale vergleicht und bei Ungleichheit ein Ungültigkeitssignal ausgibt, wobei bei vorliegen des Ungültigkeitssignals die Datensignale, welche von dem ersten Empfänger empfangen wurden, als ungültig verworfen werden.

Eine erste Variante des Verfahrens sieht vor, dass über einen Eingang des dritten Empfängers die über einen Ausgang des ersten Senders ausgegebenen Taktsignale direkt zurückgelesen werden.

Eine zweite Variante des Verfahrens sieht vor, dass über einen Eingang des dritten Empfängers die Taktsignale über ein Zusatzleitungspaar, welches mit dem dritten Sender innerhalb des Feldgerätes verbunden ist, zurückgelesen werden, wobei über einen Ausgang des zweiten Empfängers im Feldgerät ankommenden Taktsignale auf einen Eingang des dritten Senders zum Zurückspeisen der Taktsignale in die Verarbeitungseinheit geschaltet werden.

Bei der Synchronen-Seriellen-Datenübertragung kommt vorzugsweise eine Punkt-zu-Punkt-Verbindung zum Einsatz. Mit dem Einsatz von RS422-Bausteinen.

Um beispielsweise auf einem Taktleitungspaar eingekoppelte EMV-Störungen sicher erkennen zu können, wird der Taktgenerator zur Ausgabe der Taktsignale an den ersten Sender von dem ersten Sender galvanisch getrennt.

Mit der Zeichnung wird ein Ausführungsbeispiel der Erfindung beschrieben. Es zeigt
- FIG 1: eine erste Variante der Anordnung,
- FIG 2: eine zweite Variante der Anordnung,
- FIG 3: eine Vergleichseinheit zum Vergleich von ausgegebenen Taktsignalen und zurückgelesenen Taktsignalen, und
- FIG 4: zeitliche Verläufe von Takt- und Datensignalen.

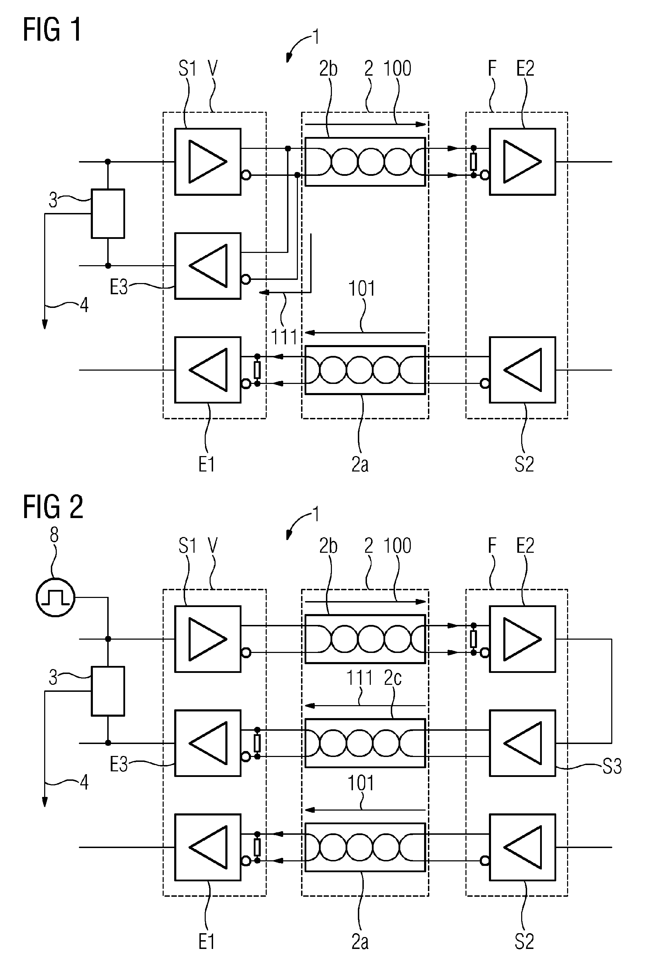

Gemäß der FIG 1 ist eine Anordnung 1 zur seriellen Datenübertragung zwischen einer Verarbeitungseinheit V und einem Feldgerät F dargestellt. Die Verarbeitungseinheit V und das Feldgerät F sind mit einer Verbindungsleitung 2 miteinander verbunden. Die Verbindungsleitung 2 weist ein Datenleitungspaar 2a für Datensignale 101 und ein Taktleitungspaar 2b für Taktsignale 100 auf. Das Feldgerät F ist beispielsweise als ein Messwertgeber und die Verarbeitungseinheit ist beispielsweise als eine Ein-/Ausgabebaugruppe der Automatisierungstechnik ausgestaltet. In dem Messwertgeber wird in Verbindung mit dem zweiten Senders S2 ein Parallel-Serien-Schieberegister betrieben. In das Parallel-Serien-Schieberegister wird permanent ein aktueller Messwert des Messwertgebers eingelesen. Wenn die Verarbeitungseinheit V einen Messwert lesen will, so gibt sie mittels eines ersten Senders S1 ein Taktsignal 100 über das Taktleitungspaar 2b aus. Das Taktleitungspaar 2b ist an einen zweiten Empfänger E2 im Feldgerät F angeschlossen. Das empfangene Taktsignal 100 wirkt mit den Parallel-Serien-Schieberegister und dem zweiten Sender S2 derart zusammen, dass die erste fallende Flanke des Taktsignals 100 ein Monoflop im Feldgerät F ansteuert, welche das Schieberegister vom parallelen Laden in eine serielle Ausgabe umschaltet. Bei jeder folgenden steigenden Taktflanke des Taktsignales 100 wird jetzt ein Datenbit ausgegeben. Wenn von einem ersten Empfänger E1 der Verarbeitungseinheit V das niederwertigste Bit empfangen wurde, wird der Takt gestoppt. Das Monoflop, dass von den Taktimpulsen immer wieder nachgetriggert wurde, fällt nach Ablauf einer Schaltzeit in den Grundzustand und erlaubt wieder die parallele Übernahme eines Messwertes in das Parallel-Serien-Schieberegister.

Um beispielsweise EMV-Störungen auf dem Taktleitungspaar 2b zu erkennen, ist die Verarbeitungseinheit V mit einem dritten Empfänger E3 ist ausgestaltet, der vom ersten Sender S1 ausgesendeten Taktsignale 100 zurückliest, wobei die Verarbeitungseinheit V weiterhin ein Vergleichsmittel 3 aufweist, welches ausgestaltet ist, die vom ersten Sender S1 ausgesendeten originalen Taktsignale 100 mit dem von dritten Empfänger E3 zurückgelesenen Taktsignale 111 zu vergleichen und bei Ungleichheit ein Ungültigkeitssignal 4 auszugeben. Bei vorliegen des Ungültigkeitssignales 4 ist die Verarbeitungseinheit V weiterhin dazu ausgestaltet, die Datensignale 101, welche von dem ersten Empfänger E1 empfangen wurden, als ungültig zu verwerfen.

Bei dieser ersten Variante wird das Taktsignal 100 direkt an der Verarbeitungseinheit V zurückgelesen. Eine Restwahrscheinlichkeit einen falschen Messwert nicht als solchen zu erkennen ist mit der ersten Variante bereits deutlich verringert worden. Da aber bei Störungen, welche in direkter Umgebung des Feldgerätes auf die Taktfolge wirken, die Taktfolge beim Feldgerät verändern können aber dennoch nicht stark genug sind um von der Verarbeitungseinheit V erkannt zu werden. Kann eine Fehlererkennung mit einer zweiten Variante noch deutlich verbessert werden.

Gemäß FIG 2 ist die Anordnung 1 dahingehend erweitert worden, dass ein Eingang des dritten Empfängers E3 mit einem Zusatzleitungspaar 2c verbunden ist, und in dem Feldgerät F ist weiterhin ein dritter Senders S3 angeordnet, an welchen an einem Ausgang des dritten Sender S3 das Zusatzleitungspaar 2c zum Zurücklesen der Taktsignale 111 angeschlossen ist, wobei ein Ausgang des ersten Empfängers E1 mit einem Eingang des dritten Senders S3 zum Zurückspeisen der Taktsignale in Verbindung steht. Die Restwahrscheinlichkeit einen falschen Messwert nicht als solchen zu erkennen, wird mit der Variante 2 weiter heruntergesetzt. Durch das Zusatzleitungspaar 2c in der Verbindungsleitung 2 kann das Feldgerät F nicht nur seine Messwerte zu der Verarbeitungseinheit V senden, sondern auch das von ihm eingelesene Taktsignal 100 wieder an die Verarbeitungseinheit ausgeben.

Zusammenfassend kann gesagt werden, dass das über einen Taktgenerator 8 generierte Taktsignal 100 mittels des ersten Senders S1 auf das Taktleitungspaar 2b gegeben und im Feldgerät F an dem zweiten Empfänger E2 ankommt. Das angekommene Taktsignal 100 wird mittels des zweiten Empfängers E2 auf den dritten Senders S3 zurückgekoppelt und über das Zusatzleitungspaar 2c wird das zurückgelesene Taktsignal 111 an den dritten Empfänger E3 der Verarbeitungseinheit V zurückgegeben.

An der Vergleichseinheit 3 liegt nun die originale Taktfolge 100 des Taktgenerators 8 und die zurückgelesene Taktfolge 111 an. Sollte das Vergleichsmittel 3 eine Ungleichheit zwischen der ausgesendeten Taktfolge 100 und der zurückgelesenen Taktfolge 111 feststellen, so wird ein Ungültigkeitssignal 4 ausgegeben. Die Verarbeitungseinheit V ist weiterhin dazu ausgestaltet, bei vorliegen eines Ungültigkeitssignales 4 den vom ersten Empfänger E1 empfangene Messwert als ungültig zu verwerfen.

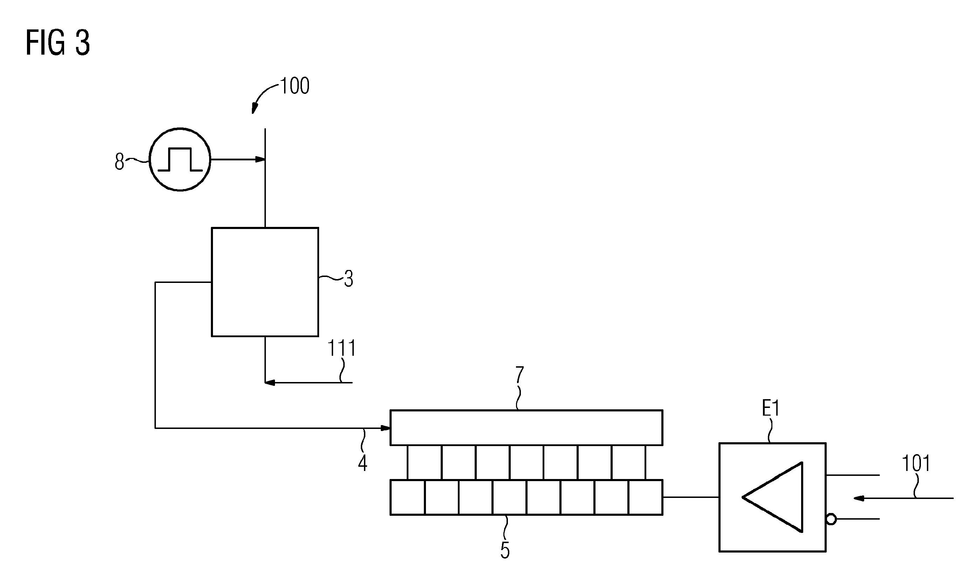

Gemäß FIG 3 ist das Vergleichsmittel 3 mit einem Parallel-Serien-Schieberegister 5 und einem Speicher 7 detaillierter dargestellt. Die Datensignale 101 werden über den ersten Empfänger E1 empfangen und Bitweise in das Parallel-Serien-Schieberegister 5 hineingeschoben. Ist das Schieberegister voll werden die Datenbits in einen Speicher 7 übertragen. Sollte der Vergleich in dem Vergleichsmittel 3 ergeben haben, dass die originale Taktfolge 100 nicht mit der zurückgelesenen Taktfolge 111 übereinstimmt, so wird das Ungültigkeitssignal 4 an den Speicher 7 angelegt und dieser gelöscht.

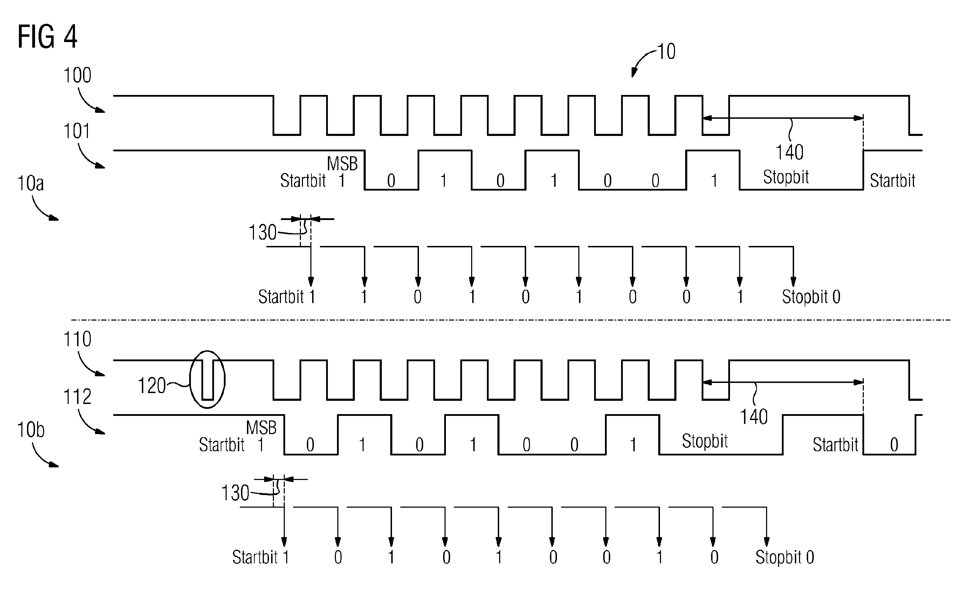

Mit der FIG 4 sind die zeitlichen Signalverläufe 10 von Takt-und Datensignalen dargestellt. Das Diagramm ist durch eine gestrichelte Linie zweigeteilt. Der obere Teil zeigt den ungestörten Fall auf und der untere Teil zeigt den gestörten Fall auf.

Die erste fallende Flanke des Taktsignals 100 veranlasst das Feldgerät F einen Messwert seriell auszugeben. Mit der ersten steigenden Taktflanke des Taktsignals 100 wird das höchstwertige Bit (MSB) mit einer Verzögerung 130 ausgegeben. Die nächste steigende Flanke im Taktsignal 100 sorgt für die Ausgabe des nächstfolgenden Bits usw.. Demnach wird eine Folge "10101001" als Messwert ausgegeben. Mit der letzten fallenden Flanke des Taktsignals 100 läuft eine Ladezeit des Parallel-Serien-Schieberegisters ab. Demnach sind mit den Signalverläufen 10a die Verläufe für den ungestörten Fall des Taktsignals 100 dargestellt. Mit den Signalverläufen 10b sind die Signalverläufe für den gestörten Fall des Taktsignals 110 dargestellt. In einem gestörten Taktsignal 110 ist an einer Stelle eine Störung 120 vorhanden. Diese Störung kann beispielsweise durch eine eingekoppelte EMV-Störung aufgetreten sein. Durch die Störung 120, welche innerhalb einer Ladezeit 140 liegt, ist das eigentliche ausgesendete Original-Taktsignal 100 gestört.

Durch diese Störung 120 liefert das Feldgerät F über den zweiten Sender S2 nun die Datensignale als ein gestörtes Datensignal 112. Die Datenbits kommen aufgrund der Störung 120 zu früh am ersten Empfänger E1 der Verarbeitungseinheit V an. Die fallende Flanke in der Störung 120 wird in dem Feldgerät F als das Startsignal erkannt und demzufolge wird jetzt mit jeder folgenden steigenden Flanke im Taktsignal 110 das nächste Datenbit des Messwertes ausgegeben. Nun ist aber in diesem Fall das MSB (gleichzeitig das zuerst gesendete Bit) eine "1". Es wird demnach kein Start-Bitfehler erkannt, da ein Highpegel als "Startbit" erwartet wird. Alle folgenden Datenbits wandern eine Position nach vorne. Der Messwert wird verfälscht und kann demnach nicht als Fehler erkannt werden. Um für diesen Fall das Nichterkennen des Fehlers zu vermeiden, weist die Anordnung das Vergleichsmittel 3 auf, welches das ausgesendete Taktsignal 100 mit dem empfangenen Taktsignal 111 vergleicht.

## Patentansprüche

1. Anordnung (1) zur seriellen Datenübertragung zwischen einer Verarbeitungseinheit (V) und einem Feldgerät (F), umfassend
- die Verarbeitungseinheit (V),
- das Feldgerät (F),
- eine Verbindungsleitung (2) aufweisend ein Datenleitungspaar (2a) für Datensignale und ein Taktleitungspaar (2b) für Taktsignale (100),
wobei die Verarbeitungseinheit (V) über die Verbindungsleitung (2) mit dem Feldgerät (F) verbunden ist,
die Verarbeitungseinheit (V) weist einen ersten Sender (S1) zum Senden der Taktsignale (100) und einen ersten Empfänger (E1)zum Empfangen der Datensignale (101) auf, das Feldgerät (F) weist einen zweiten Sender (S2) zum Senden der Datensignale und einen zweiten Empfänger (E2) zum Empfangen der Taktsignale (100) auf, wobei der erste Sender (S1) mit dem ersten Empfänger (E1) über das Taktleitungspaar (2a) verbunden ist und der zweite Sender (S2) mit dem ersten Empfänger (E1) über das Datenleitungspaar (2b) verbunden ist,
**dadurch gekennzeichnet, dass** die Verarbeitungseinheit (V) einen dritten Empfänger (E3) aufweist, welcher ausgestaltet ist die vom ersten Sender (S1) ausgesendeten Taktsignale (100) zurückzulesen, wobei die Verarbeitungseinheit (V) weiterhin ein Vergleichsmittel (3) aufweist, welches ausgestaltet ist die vom ersten Sender (S1) ausgesendeten Taktsignale (100) mit dem vom dritten Empfänger (E3) zurückgelesenen Taktsignale (111) zu vergleichen und bei Ungleichheit ein Ungültigkeitssignal (4) ausgibt, wobei die Verarbeitungseinheit (V) weiterhin dazu ausgestaltet ist bei vorliegen des Ungültigkeitssignals (4) die Datensignale (101), welche von dem ersten Empfänger (E1) empfangen wurden, als ungültig zu verwerfen.

2. Anordnung (1) nach Anspruch 1, wobei ein Eingang des dritten Empfängers (E3) unmittelbar mit einem Ausgang des ersten Senders (S1) zum Zurücklesen der Taktsignale (111) verbunden ist.

3. Anordnung (1) nach Anspruch 1, wobei ein Eingang des dritten Empfängers (E3) mit einem Zusatzleitungspaar (2c) verbunden ist und in dem Feldgerät (F) weiterhin ein dritter Sender (S3) angeordnet ist, an welchen an einem Ausgang des dritten Senders (S3) das Zusatzleitungspaar (2c) zum Zurücklesen der Taktsignale (111) angeschlossen ist, wobei ein Ausgang des ersten Empfängers (E1) mit einem Eingang des dritten Senders (S3) zum Zurückspeisen der Taktsignale (100) in Verbindung steht.

4. Anordnung (1) nach einem der Ansprüche 1 bis 3, wobei dem ersten Empfänger (E1) und dem zweiten Sender (S2) je ein Parallel-Serien-Schieberegister (5,6) zugeordnet ist.

5. Anordnung (1) nach einem der Ansprüche 1 bis 4, wobei dem ersten Sender (S1) ein Taktgenerator (8) zugeordnet ist und das Vergleichsmittel (3) derart mit dem Taktgenerator (8) verbunden ist, dass es die Taktsignale (100) vor dem Ausgang des ersten Senders (S1) für den Vergleich abgreift.

6. Anordnung (1) nach einem der Ansprüche 1 bis 5, wobei die Verarbeitungseinheit (3) eine Entkopplungseinheit (9) aufweist, welche den ersten Sender (S1) von einem Taktgenerator (8) galvanisch trennt.

7. Verfahren zum Betrieb einer Anordnung (1) zur seriellen Datenübertragung zwischen einer Verarbeitungseinheit (V) und einem Feldgerät (F), wobei in der Verarbeitungseinheit (V) ein Taktgenerator (8) zur Ausgabe eines Taktsignals (100) über einen ersten Sender (S1) betrieben wird, das Taktsignal (100) wird in dem Feldgerät (F) mittels eines zweiten Empfängers (E2) empfangen, wobei mit den empfangenen Taktsignalen (100) in dem Feldgerät (F) ein zweiter Sender (S2) derart gesteuert wird, dass über ihn aus einem Parallel-Serien-Schieberegister (6) Datensignale (101) seriell zu einem ersten Empfänger (E1) in der Verarbeitungseinheit (V) gesendet werden,
**dadurch gekennzeichnet, dass**
in der Verarbeitungseinheit (V) mittels eines dritten Empfängers (E3) die vom ersten Sender (S1) ausgesendeten Taktsignale (100) zurückgelesen werden, wobei in der Verarbeitungseinheit (V) ein Vergleichsmittel (3) betrieben wird, welches die vom ersten Sender (S1) ausgesendeten Taktsignale (100) mit den vom dritten Empfänger (E3) zurückgelesenen Taktsignale (111) vergleicht und bei Ungleichheit ein Ungültigkeitssignal (4) ausgibt, wobei bei Vorliegen des Ungültigkeitssignals (4) die Datensignale, welche von dem ersten Empfänger (E1) empfangen wurden, als ungültig verworfen werden.

8. Verfahren nach Anspruch 7, wobei ein Eingang des dritten Empfängers (E3) die über einen Ausgang des ersten Senders (S1) ausgegebenen Taktsignale direkt zurückliest.

9. Verfahren nach Anspruch 7, wobei über einen Eingang des dritten Empfängers (E3) die Taktsignale (100) über ein Zusatzleitungspaar (2c), welches mit einen dritten Sender (S3) innerhalb des Feldgerätes (F) verbunden ist zurückgelesen werden, wobei über einen Ausgang des zweiten Empfängers (E2) die im Feldgerät (F) angekommenen Taktsignale (100) auf einem Eingang des dritten Senders (S3) zum Zurückspeisen der Taktsignale (100) in die Verarbeitungseinheit (V) geschaltet werden.

10. Verfahren nach einem der Ansprüche 7 bis 9, zum Einsatz bei einer Punkt-zu-Punkt-Verbindung mit dem Einsatz von RS422-Bausteinen.

11. Verfahren nach einem der Ansprüche 7 bis 10, wobei der Taktgenerator (8) zur Ausgabe der Taktsignale (100) an den ersten Sender (S1) von dem ersten Sender (S1) galvanisch getrennt wird.
